# EUROPÄISCHE PATENTSCHRIFT

(11) **EP 3 210 890 B1**
(45) Veröffentlichungstag und Bekanntmachung des Hinweises auf die Patenterteilung: **05.10.2022**
(21) Anmeldenummer: 17156949.4
(22) Anmeldetag: 20.02.2017
(51) Int. Cl.: B64D 37/34, B64G 1/40, F02K 9/46

(54) **KÜHLUNG VON TREIBSTOFF FÜR EIN TRIEBWERK**
COOLING OF FUEL FOR AN ENGINE
REFROIDISSEMENT DE CARBURANT POUR UN MOTEUR

(30) Priorität: 24.02.2016 DE 102016103223
(43) Veröffentlichungstag der Anmeldung: 30.08.2017
(73) Patentinhaber: ArianeGroup GmbH, 82024 Taufkirchen (DE)
(72) Erfinder: Isselhorst, Armin, 28199 Bremen (DE)
(74) Vertreter: Marschall, Stefan

(56) Entgegenhaltungen:
- EP-A1- 2 693 033
- DE-U1- 29 815 951
- JP-A- 2009 085 539
- US-A1- 2001 030 040
- US-A1- 2006 048 539

## Beschreibung

Die vorliegende Erfindung betrifft ein Versorgungssystem für ein Triebwerk mit Treibstoff und ein Verfahren zum Kühlen von Treibstoff für ein Triebwerk

Das Dokument EP-A1-2 693 033 beschreibt den Stand der Technik.

Bei der Zuführung von Treibstoff aus einem Tank in einen Motor sind häufig Bedingungen einzuhalten, die einen möglichst geringen Verbrauch und eine sichere Verbrennung gewährleisten sollen. So kann beispielsweise durch Einhaltung spezifischer Druck- und Temperaturbereiche für den Treibstoff eine Kavitationsbildung verhindert oder zumindest reduziert werden, die sonst zu einer unregelmäßigen Treibstoffzufuhr und damit ungleichmäßigen Verbrennung führen kann.

Zur Kühlung des Treibstoffs im Tank kann dieser zum Beispiel druckentlastet werden; damit kann durch Verdampfung des Treibstoffs dessen Temperatur reduziert werden (Joule-Thomson-Kühlung). Insbesondere kann auf diese Weise in der Raketentechnik einer solaren Erwärmung des Treibstoffs im Tank begegnet werden, die nach langen ballistischen Phasen (vor einer Wiederzündung des Triebwerks) aus dem solaren Wärmeeintrag resultieren kann.

Das genannte Verfahren erfordert jedoch eine anschließende Wiederbedrückung des Tanks mit einem Bedrückungsgas (z.B. gasförmigem Helium), das in einem oder mehreren Druckgasspeichern extra mitgeführt werden muss. Das Verfahren ist zudem energetisch nicht optimiert, weil jeweils der gesamte Tankinhalt gekühlt wird, von dem ggf. ein großer Teil in der jeweiligen Antriebsphase im Tank verbleibt, um erst später verwendet zu werden.

Die vorliegende Erfindung hat die Aufgabe, eine Technik bereitzustellen, mit der die vorgenannten Nachteile vermieden werden und die eine effiziente Kühlung von Treibstoff für ein Triebwerk ermöglicht.

Die Aufgabe wird gelöst durch ein Versorgungssystem für ein Triebwerk gemäß Anspruch 1 und ein Verfahren gemäß Anspruch 2.

Vorteilhafte Ausführungsformen werden im Unteranspruch 3 sowie in der Beschreibung und den Figuren offenbart.

Ein Wärmetauscher dient dem Kühlen von Treibstoff für ein Triebwerk; ein "Triebwerk" kann dabei in dieser Schrift ein Flugzeug- oder ein wiederentzündbares Raketentriebwerk sein und insbesondere ein oder mehrere Teiltriebwerke (z.B. ein Haupttriebwerk und mindestens ein Nebentriebwerk) umfassen.

Der Wärmetauscher umfasst eine Hauptstromleitung zum Durchleiten des zu kühlenden Treibstoffs und eine Nebenstromleitung zum Durchleiten eines Kühlstroms, mit dem der Treibstoff in der Hauptstromleitung gekühlt werden kann. Die Nebenstromleitung zweigt dabei von der Hauptstromleitung ab.

Die Abzweigung bewirkt somit, dass nach einem Einleiten von Treibstoff in die Hauptstromleitung ein Teil des eingeleiteten Treibstoffs in die Nebenstromleitung abgeführt wird, um dort als Kühlstrom der Kühlung zu dienen. Bis zur Abzweigung führt die Hauptstromleitung somit außer dem Treibstoff, der (später) ganz oder teilweise zum Triebwerk geleitet wird, auch den Treibstoff, der hinter der Abzweigung in der Nebenstromleitung als Kühlstrom fungiert.

Ein erfindungsgemäßes Versorgungssystem dient der Versorgung eines Triebwerks mit Treibstoff. Das Versorgungssystem umfasst einen Tank, ein Förderleitungssystem und einen oder mehrere im Innern des Tanks angeordnete/n Wärmetauscher gemäß einer der in dieser Schrift offenbarten Ausführungsformen. Das Förderleitungssystem ist dabei dazu eingerichtet, Treibstoff vom Tank durch den einen oder die mehreren Wärmetauscher hindurch zum Triebwerk zu leiten. Es kann dazu eine Pumpe, insbesondere eine Turbopumpe umfassen, die vorzugsweise zwischen Wärmetauscher und Triebwerk angeordnet ist.

Der Wärmetauscher ist im Innern des Tanks angeordnet. Umfasst das Versorgungssystem mehrere Wärmetauscher, ist mindestens einer der Wärmetauscher im Innern des Tanks angeordnet.

Insbesondere können mehrere Wärmetauscher innerhalb des Tanks angeordnet sein.

Eine Position innerhalb des Tanks kann vorteilhaft für einen drehmomentfreien Betrieb sorgen, zudem kann sie eine Außenisolierung und ein Auspuffrohr entbehrlich machen. Darüber hinaus kann eine Leckage am Wärmetauscher minimiert werden, weil durch die Druckdifferenz zwischen Treibstoffeintritt und -austritt nur Druckdifferenzen im Bereich von Strömungsdruckverlusten entstehen. Dementsprechend muss der Wärmetauscher auch dann nicht als Druckbehälter ausgelegt sein, wenn der Treibstoff ein Flüssiggas umfasst. Insbesondere ermöglicht dies ein geringes Gewicht des Wärmetauschers.

Bei einer derartigen Position im Innern des Tanks führt die Nebenstromleitung vorzugsweise von ihrer Abzweigung (von der Hauptstromleitung) zu einer Öffnung im Tank; durch diese kann der Kühlstrom in die Umgebung des Tanks abgelassen werden (nachdem er den Treibstoffstrom im Innern der Hauptstromleitung gekühlt hat).

Eine Position außerhalb des Tanks hingegen erlaubt einen relativ kleinen Tank und vereinfacht damit insbesondere dessen Herstellung, beispielsweise bei Ausführungsformen, in denen das Versorgungssystem in der Raumfahrt eingesetzt wird bzw. werden soll, z.B. zur Versorgung einer Weltraumrakete.

Vorzugsweise umfasst der Wärmetauscher mechanische Halterungen mit Schwingungsdämpfern zur Montage des Wärmetauschers (innerhalb oder außerhalb des Tanks).

Ein erfindungsgemäßes Verfahren dient einem Kühlen von Treibstoff für ein Triebwerk. Es umfasst ein Einleiten des Treibstoffs (z.B. aus einem Tank) in eine Hauptstromleitung eines Wärmetauschers, ein Abzweigen eines Kühlstroms von der Hauptstromleitung in eine Nebenstromleitung des Wärmetauschers, ein Absenken einer Temperatur im Kühlstrom in der Nebenstromleitung sowie ein Kühlen mindestens eines Abschnitts der Hauptstromleitung (und damit des darin befindlichen Treibstoffs) mit dem Kühlstrom in der

Nebenstromleitung, während die in der Hauptstromleitung fließende Treibstoffmenge dem Triebwerk zugeführt wird.

Der Kühlstrom wird somit aus einem Teil des in die Hauptstromleitung eingeleiteten Treibstoffs gebildet.

Gemäß einer vorteilhaften Ausführungsform umfasst das erfindungsgemäße Verfahren ein Ablassen des (z.B. verdampften) Kühlstroms aus der Nebenstromleitung in eine Umgebung des Wärmetauschers (z.B. in das Weltall).

Die vorliegende Erfindung ermöglicht in vorteilhafter Weise eine bedarfsgerechte Kühlung des Treibstoffs. Zum einen kann nämlich eine Kühlung von Treibstoff, der beispielsweise lediglich als Vorrat im Tank enthalten ist, um in einer späteren Antriebsphase verwendet zu werden, vermieden werden, denn es kann lediglich die durch die Hauptstromleitung fließende Treibstoffmenge (insbesondere während diese dem Triebwerk zugeführt wird) gekühlt werden. Zum anderen kann erfindungsgemäß ein Anteil des aus dem Tank geförderten Treibstoffs selbst für die Kühlung verwendet werden, indem dieser Anteil in die Nebenstromleitung abgeführt (bzw. abgezweigt) wird. Dadurch kann eine funktionale Abhängigkeit des Kühlprozesses von der in die Hauptstromleitung eingeleiteten Treibstoffmenge hergestellt werden.

Die Hauptstromleitung kann sich in eine Mehrzahl an Teil-Hauptstromleitungen aufteilen, die z.B. mindestens abschnittsweise parallel zueinander verlaufen können. Analog kann sich die Nebenstromleitung in eine Mehrzahl an Teil-Nebenstromleitungen aufteilen, die z.B. mindestens abschnittsweise parallel zueinander verlaufen können. Auf diese Weise kann der Temperaturaustausch verbessert werden, weil die Begrenzungen (z.B. Wände) der einzelnen Teil-Leitungen als Temperaturaustauschflächen dienen können.

Insbesondere kann der Wärmetauscher als Rohrbündelwärmetauscher ausgebildet sein. Die Rohre im Rohrbündel können beispielsweise durchgehend gerade oder U-förmig ausgebildet sein.

Gemäß vorteilhaften Ausführungsformen der vorliegenden Erfindung zweigt die Nebenstromleitung vor oder hinter einer Temperaturaustauschzone des Wärmetauschers von der Hauptstromleitung ab; die Präpositionen "vor" und "hinter" sind dabei als auf eine vorgesehene Durchflussrichtung des Treibstoffs durch die Hauptstromleitung bezogen zu verstehen. In dieser Temperaturaustauschzone grenzen die Nebenstromleitung und die Hauptstromleitung aneinander an, sind also vorzugsweise lediglich durch ein wärmeleitfähiges Material wie z.B. Metall getrennt. Gemäß einer vorteilhaften Ausführungsform hat das wärmeleitfähige Material eine Wandstärke von mindestens 0,1 mm und höchstens 0,5mm, bevorzugter mindestens 0,1mm und höchstens 0,3mm.

Sofern die Abzweigung der Nebenstromleitung (von der Hauptstromleitung) vor der Temperaturaustauschzone angeordnet ist, kann der die Temperaturaustauschzone in der Hauptstromleitung passierende Teil des Treibstoffs (vorzugsweise vollständig) - nachdem er gekühlt wurde - dem Triebwerk zugeführt werden. Der in die Nebenstromleitung abgeführte Teil hingegen kann separat einem Kühlprozess (z.B. einer externen Kühlung oder einer Druckentlastung) unterzogen werden, um alsdann in der Nebenstromleitung (und in der Temperaturaustauschzone) als Kühlstrom zu fungieren.

Sofern hingegen die Abzweigung der Nebenstromleitung (von der Hauptstromleitung) hinter der Temperaturaustauschzone angeordnet ist, ermöglicht der Wärmetauscher einen Treibstoffdurchfluss in der Hauptstromleitung durch die Temperaturaustauschzone, danach - für einen Teil des Treibstoffs - durch die Abzweigung in die Nebenstromleitung sowie in der Nebenstromleitung erneut (nunmehr als Kühlstrom) durch die Temperaturaustauschzone. Der in die Nebenstromleitung abgezweigte Treibstoff ist somit in diesem Falle bereits vorgekühlt. Vor seiner Verwendung als Kühlstrom in der Temperaturaustauschzone kann der Treibstoff (analog zum oben betrachteten Fall) einem weiteren Kühlprozess (z.B. einer externen Kühlung oder einer Druckentlastung) unterzogen werden.

Entsprechendes gilt jeweils, wenn die Nebenstromleitung eine Mehrzahl an Teil-Nebenstromleitungen umfasst, von denen mindestens eine (in vorgesehener Durchflussrichtung des Treibstoffs durch die Hauptstromleitung betrachtet) vor und/oder mindestens eine hinter der Temperaturaustauschzone abzweigt.

Analoges gilt auch für eine Ausführungsform des erfindungsgemäßen Verfahrens, bei der das Abzweigen des Kühlstroms von der Hauptstromleitung in eine Nebenstromleitung des Wärmetauschers (bezogen auf die Durchflussrichtung des Treibstoffs durch die Hauptstromleitung) vor und/oder hinter einer Temperaturaustauschzone erfolgen kann.

Der Wärmetauscher kann als Gegenstrom-, Gleichstrom- oder Kreuzstromrekuperator ausgebildet sein, also dazu eingerichtet, den zu kühlenden Treibstoff und den Kühlstrom (im Wesentlichen) in entgegengesetzten Richtungen, in die gleiche Richtung oder in einander (ein- oder mehrfach) kreuzenden Richtungen durchzuleiten. Entsprechend kann ein erfindungsgemäßes Verfahren ein Durchleiten des Kühlstroms durch die Nebenstromleitung in dieselbe Richtung umfassen, in die der Treibstoff durch die Hauptstromleitung geleitet wird, in dazu entgegengesetzte Richtung oder in die Hauptstromrichtung (ein- oder mehrfach) kreuzende Richtung(en).

Eine entgegengesetzte Richtung von Kühlstrom und zu kühlendem Treibstoff bewirkt eine besonders vorteilhafte Kühlung. Gleiche Richtungen dagegen können insbesondere in Ausführungsformen, in denen der Nebenstrom (in Durchflussrichtung des Hauptstroms) vor einer Temperaturaustauschzone von der Hauptstromleitung abzweigt, einen kompakten und vereinfachten Aufbau des Wärmetauschers ermöglichen. Analog können gekreuzte Richtungen einen vorteilhaften Gesamtaufbau und - gerade bei Mehrfachkreuzung - eine große Durchlaufdauer ermöglichen, was einen entsprechend guten Wärmeaustausch gewährleisten kann.

Insbesondere können die Hauptstromleitung (bzw. zumindest ein Abschnitt der Hauptstromleitung) sowie die Nebenstromleitung (bzw. zumindest ein Abschnitt der Nebenstromleitung) in der Temperaturaustauschzone im Wesentlichen parallel zueinander (oder mit gleichlaufenden Krümmungen) verlaufen. Vorzugsweise sind dabei der zu kühlende Treibstoff und der Kühlstrom zumindest in einem Abschnitt lediglich durch ein oder mehrere Material/ien von guter Wärmeleitfähigkeit und/oder durch mindestens ein Material mit möglichst großer Oberfläche bzw. hohem Oberflächen- zu-Volumenverhältnis voneinander getrennt.

In vorteilhafter Weise verläuft mindestens ein Abschnitt der Nebenstromleitung im Innern der Hauptstromleitung und/oder verläuft mindestens ein Abschnitt der Hauptstromleitung im Innern der Nebenstromleitung. Haupt- und Nebenstromleitungen liegen also zumindest teilweise ineinander. Die jeweils innen liegende (Teil-) Leitung kann dabei vorzugsweise (im Querschnitt) vollständig von einem die jeweils äußere Leitung durchströmenden Treibstoffstrom umspült werden. Dies ermöglicht einen besonders guten Temperaturaustausch.

Ist der Wärmetauscher beispielsweise wie oben erwähnt als Rohrbündelwärmetauscher ausgebildet, kann ein Abschnitt der Nebenstromleitung als Rohrbündel mit mehreren Teil-Nebenstromleitungen innerhalb der Hauptstromleitung angeordnet sein oder umgekehrt.

Der zu kühlende Treibstoff kann insbesondere ein Flüssiggas umfassen (beispielsweise ein Kryogen, insbesondere Flüssigwasserstoff oder Flüssigsauerstoff). Vorzugsweise weist die Nebenstromleitung in diesem Falle eine (vorzugsweise kontrollierbare) Drossel zur Verringerung eines Drucks (und damit der Siedetemperatur) des Flüssiggases auf Verdampfungsdruckniveau auf. Mit der Verdampfung kühlt der durch die Nebenstromleitung geführte Treibstoff ab und kann daher als Kühlstrom für den zu kühlenden Treibstoff agieren. Gemäß einer vorteilhaften Ausführungsform des erfindungsgemäßen Verfahrens erfolgt analog das Absenken der Temperatur des Kühlstroms durch ein Verringern des Drucks (und damit der Siedetemperatur) im Flüssiggas auf Verdampfungsdruckniveau, beispielsweise mit Hilfe einer (vorzugsweise kontrollierbaren) Drossel.

Bei derartigen Ausführungsformen wird somit eine Verdampfungswärme des Treibstoffs zur Kühlung genutzt. Insbesondere ermöglicht die 11061EP (2015-009) vorliegende Erfindung bei Verwendung zur Kühlung von Raketentreibstoff eine Gewichtsreduzierung, weil sie einen Verzicht auf Druckgasspeicher mit einem Bedrückungsgas (z.B. gasförmigem Helium) ermöglichen.

Vorzugsweise umfasst die Nebenstromleitung ein Ventil, mit dem eine Durchleitung des Kühlstroms gestoppt werden kann. Auf diese Weise kann die Funktion des Wärmetauschers ein- und abgestellt sowie vorzugsweise gesteuert werden. Gemäß einer vorteilhaften Ausführungsform umfasst der Wärmetauscher zudem eine Durchfluss- und/oder eine Temperaturmesseinheit, über die die Kühlfunktion in Zusammenwirkung mit dem Ventil geregelt werden kann.

In vorteilhafter Weise ist der Wärmetauscher als Druckbehälter ausgelegt. Damit eignet er sich insbesondere zur Anordnung auch außerhalb des Tanks. Vorzugsweise ist der Wärmetauscher dazu eingerichtet, den im Tank herrschenden Druck in der Hauptstromleitung zumindest im Wesentlichen aufrecht zu erhalten.

Gemäß einer vorteilhaften Ausführungsform eines erfindungsgemäßen Verfahrens erfolgt das Einleiten des Treibstoffs in die Hauptstromleitung außerhalb der Erdatmosphäre. Insbesondere kann das Verringern des Drucks des Flüssiggases auf Verdampfungsdruckniveau (und damit das Bewirken der Joule- Thomson-Kühlung) ein Abführen des Verdampfungsgases in das Vakuum des Weltraums umfassen.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

Es zeigen schematisch:
- Figur 1:: einen Wärmetauscher in perspektivischer Ansicht;
- Figur 2:: einen seitlichen Einblick in das Innere des in Figur 1 dargestellten Wärmetauschers; und
- Figur 3:: einen Aufbau eines Versorgungssystems für ein Triebwerk mit Treibstoff;

- Figur 4: und eine exemplarische Ausführungsform eines erfindungsgemäßen Wärmetauschers im Innern eines Tanks.

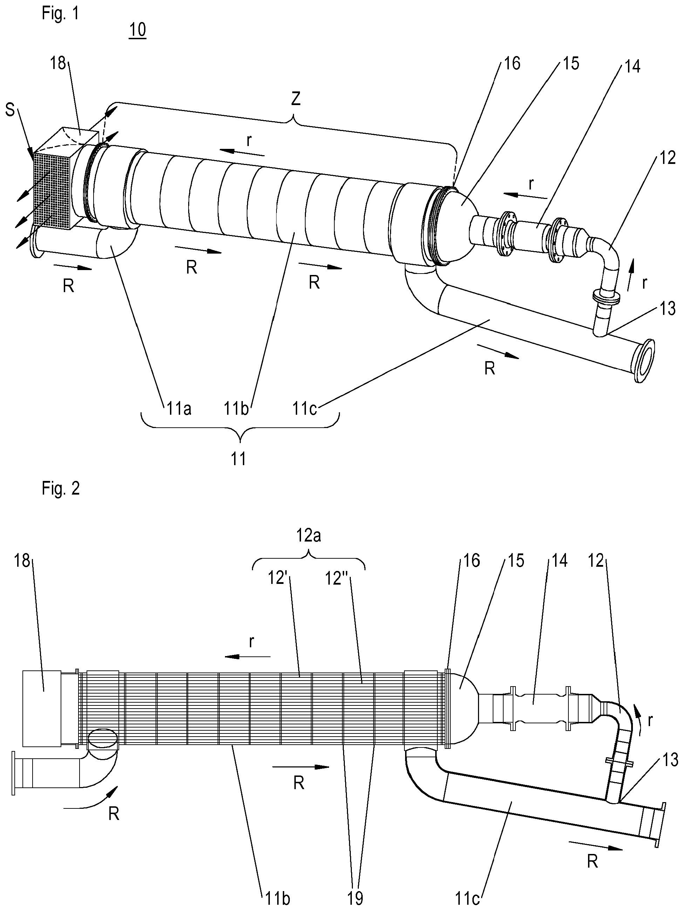

In Figur 1 ist ein Wärmetauscher 10 gemäß einer exemplarischen Ausführungsform dargestellt. Der Wärmetauscher umfasst eine Hauptleitung 11, die drei Abschnitte umfasst: Ein erster Abschnitt 11a der Hauptleitung 11 ist dazu eingerichtet, an ein Förderleitungssystem, insbesondere an eine Zuleitung aus einem Tank oder auch direkt an einen Tankauslass angeschlossen zu werden; dies ist in der Figur durch einen Flansch dargestellt, alternativ wären auch andere Anschlussmöglichkeiten möglich. Ein zweiter Abschnitt 11b der Hauptleitung verläuft durch eine Temperaturaustauschzone Z innerhalb eines Außenrohrs; Einzelheiten dazu sind in der Figur 2 zu erkennen und werden in deren Beschreibung erläutert. Ein dritter Abschnitt 11c schließlich ist dazu eingerichtet, an ein Förderleitungssystem, insbesondere an eine Zuleitung zu einem Triebwerk angeschlossen zu werden; dies ist in der Figur wiederum durch einen Flansch dargestellt, alternativ sind auch hier andere Anschlussmöglichkeiten möglich.

Eine vorgesehene Durchflussrichtung R von Treibstoff durch die Hauptstromleitung ist in der Figur mit Pfeilen angegeben.

Vom dritten Abschnitt 11c der Hauptstromleitung, der in Durchflussrichtung R gesehen hinter der Temperaturaustauschzone Z liegt, zweigt eine Nebenstromleitung 12 ab. Während ein Teil des in der Temperaturaustauschzone abgekühlten Treibstoffs nach einem entsprechenden Anschluss des dritten Abschnitts 11c zum Triebwerk geleitet werden kann, wird ein weiterer Teil des Treibstoffs in Durchflussrichtung r in die Nebenstromleitung abgezweigt. Diese führt durch ein Ventil 14 und eine Verteilerkuppel 15 über eine Einspritzvorrichtung 16 zur Druckabsenkung hindurch in die Temperaturaustauschzone Z und von dort weiter in einen Dampfauslass 18. Der Verlauf innerhalb der Temperaturaustauschzone wird wiederum weiter unten mit Bezug zur Figur 2 erläutert.

Mit Hilfe des Ventils 14 kann der Durchfluss durch die Nebenstromleitung kontrolliert werden.

Durch den Dampfauslass 18 kann der durch die Nebenstromleitung geführte Treibstoff in die Umgebung des Wärmetauschers entweichen, beispielsweise in das Vakuum des Weltraums. Die Verbindung zur Umgebung ermöglicht ein Absenken des Drucks in der Nebenstromleitung gegenüber einem Druck in der Hauptstromleitung; so kann der durch die Nebenstromleitung hindurchgeleitete Treibstoff abgekühlt werden. In der Temperaturaustauschzone Z des Wärmetauschers kann dieser abgekühlte Treibstoff als Kühlstrom verwendet werden, der Wärme des durch die Hauptstromleitung geleiteten Treibstoffs aufnehmen kann.

Insbesondere kann der Druck vorzugsweise auf ein Dampfdruckniveau gesenkt werden, so dass der Treibstoff z.B. in einem Eintrittsbereich des Nebenstroms in die Temperaturaustauschzone aus flüssigem Zustand in ein Flüssigkeits-Dampf-Gemisch umgeformt werden kann. Vorzugsweise verdampft dieses Gemisch bei der Durchströmung der Temperaturaustauschzone Z des Wärmetauschers vollständig und kann durch den Dampfauslass 18 ausströmen; dies ist in der Figur durch entsprechende Pfeile gekennzeichnet. Die Druckabsenkung kann beispielsweise in Durchflussrichtung hinter der Einspritzvorrichtung 16 erfolgen, die zur exakten Mengenaufteilung vorzugsweise für jedes Rohr eine Einspritzdüse aufweist.

Im dargestellten Beispiel leitet der Dampfauslass den Dampf in einander entgegengesetzte Richtungen, die jeweils orthogonal zu einer Längsrichtung des Wärmetauschers 10 sind; dies erlaubt insbesondere einen drehmomentfreien Dampfaustritt (bezogen auf die Hochachse einer Rakete) und einen Einbau des Wärmetauschers, bei dem eine Stirnfläche S des Wärmetauschers an einem Gehäuse befestigt ist, wohingegen die Temperaturaustauschzone des Wärmetauschers frei, also ohne Anlagefläche in einen Einbauraum hineinragen kann. Insbesondere kann der Wärmetauscher so in eine (möglichst) direkte Verbindung zwischen Tank und Triebwerk (die damit ein besonders geringes Gewicht haben kann) eingebaut werden. Zudem können Unterschiede in der Wärmeisolierung an den verschiedenen Stellen des Wärmetauschers vermieden werden, die sonst aus Kontaktflächen resultieren könnten.

Im in der Figur 1 gezeigten Ausführungsbeispiel zweigt die Nebenstromleitung (in vorgesehener Durchflussrichtung R durch die Hauptstromleitung 11 gesehen) hinter der Temperaturaustauschzone Z von der Hauptstromleitung ab, und der Wärmetauscher ist als Gegenstromrekuperator ausgebildet (Kühlstrom und zu kühlender Treibstoff werden also in der Temperaturaustauschzone in entgegengesetzte Richtungen r bzw. R geleitet). Alternativ könnte die Nebenstromleitung (in vorgesehener Durchflussrichtung R durch die Hauptstromleitung 11 gesehen) vor der Temperaturaustauschzone Z von der Hauptstromleitung abzweigen und/oder der Wärmetauscher könnte als Gleichstrom- oder Kreuzstromrekuperator ausgebildet sein.

Die Figur 2 zeigt einen Einblick in einen Wärmetauscher 10, wie er in Figur 1 von außen dargestellt und in der zugehörigen Beschreibung erläutert ist. Wie in der Figur 2 zu erkennen ist, ist der Wärmetauscher 10 als Rohrbündelwärmetauscher ausgebildet; die Nebenstromleitung ist dabei als Rohrbündel in der Temperaturaustauschzone Z in mehrere (z.B. mindestens 100 oder sogar mindestens 1000) zueinander parallele Teil-Nebenstromleitungen 12', 12" aufgeteilt, die im Innern des mittleren Abschnitts 11b der Hauptstromleitung geführt werden und mindestens teilweise aus einem Material mit hoher Wärmeleitfähigkeit hergestellt sind (z.B. Metall). Die als Rohrbündel ausgebildeten Teil-Nebenstromleitungen 12', 12", die zusammen einen Abschnitt 12a der Nebenstromleitung ausmachen, werden von Umlenk- und Halteelementen 19 im Abschnitt 11b der Hauptstromleitung gehalten, die bei vorgesehener Verwendung des Wärmetauschers zudem eine Verwirbelung des die Teil-Nebenstromleitungen umströmenden Treibstoffs und damit einen verbesserten Temperaturübergang bewirken.

Von der Verteilkuppel 15 wird der Kühlstrom vorzugsweise durch eine Einspritzvorrichtung 16 hindurch in die Teil-Nebenstromleitungen 12', 12" geleitet. Die Einspritzvorrichtung wirkt dabei als Drossel, welche die oben beschriebene Absenkung des Drucks im Kühlstrom bewirkt. Besonders bevorzugt ist eine Ausführungsform, bei der der Kühlstrom mit Durchtritt durch die Einspritzvorrichtung und Eintritt in die Teil-Nebenstromleitungen 12', 12" vom flüssigen in einen gasförmigen Zustand übergeht und damit zu einem Verdampferstrom wird.

Gemäß einem speziellen Ausführungsbeispiel umfasst der Treibstoff Flüssigwasserstoff und/oder Flüssigsauerstoff. Zur Kühlung von 6,7 kg/s Flüssigwasserstoff um 5°C werden beispielsweise 0,9 kg/s Verdampferstrom benötigt; zur Kühlung von 53 kg/s Flüssigsauerstoff um 6°C werden 13 kg/s Verdampferstrom benötigt.

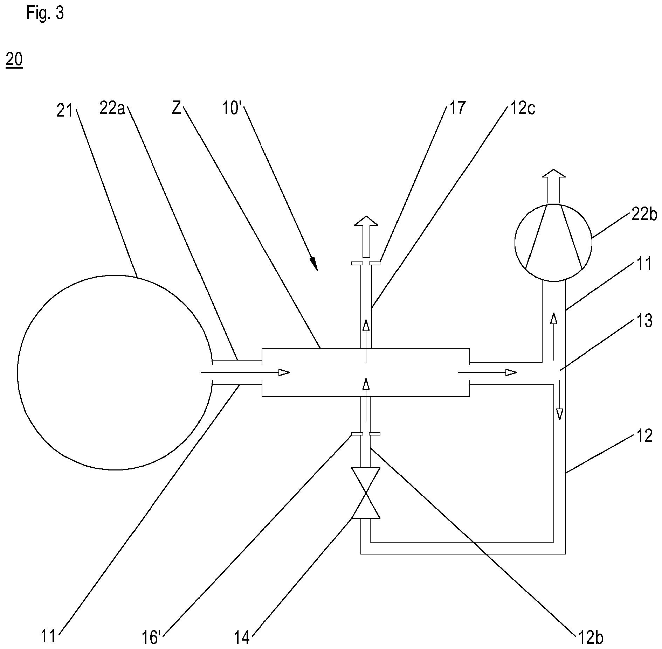

Die Figur 3 zeigt schematisch einen Aufbau eines nicht erfindungsgemäßen Versorgungssystems, mittels dem ein Triebwerk mit Treibstoff versorgt werden kann. Das Versorgungssystem umfasst einen Tank 21, einen Wärmetauscher 10' sowie ein Förderleitsystem, das in einem tankseitigen Abschnitt eine Zuleitung 22a zwischen Tank 21 und Wärmetauscher 10' umfasst sowie in einem triebwerkseitigen Abschnitt eine Pumpe 22b, die dazu eingerichtet ist, den Treibstoff aus dem Tank in mindestens ein Triebwerk zu pumpen. Der Wärmetauscher 10' umfasst eine Temperaturaustauschzone Z, durch die eine Hauptstromleitung 11 sowie - dazu senkrecht - eine Nebenstromleitung 12 führen; der Wärmetauscher 10' des gezeigten Beispiels ist somit als Kreuzstromrekuperator ausgebildet.

Die vorgesehenen Durchflussrichtungen durch die Nebenstrom- und die Hauptstromleitungen sind jeweils durch Pfeile angegeben. Die Nebenstromleitung 12 zweigt im gezeigten Beispiel - in vorgesehener Durchflussrichtung durch die Hauptstromleitung gesehen - hinter der Temperaturaustauschzone von der Hauptstromleitung 11 ab und führt in einem Abschnitt 12a durch ein Ventil 14 zu einem als Drossel ausgebildeten Einspritzvorrichtung 16, alsdann in einem Abschnitt 12c durch die Temperaturaustauschzone Z und schließlich durch eine (zweite) Drossel 17 in die Umgebung, in der vorzugsweise ein Vakuumdruck herrscht (z.B. in das Weltall). Über das Ventil 14 kann dabei der Durchfluss des in der Nebenstromleitung geführten Kühlstroms durch die Temperaturaustauschzone Z und damit ein Ausmaß der Kühlfunktion eingestellt werden. Insbesondere kann der Wärmetauscher über das Ventil 14 wahlweise zu- oder abgeschaltet werden. Mittels der Drosseln 16, 17 kann eine kontrollierte Druckverringerung des die Nebenstromleitung durchströmenden Treibstoffs auf Verdampfungsniveau und damit dessen Abkühlung bewirkt werden. Vorzugsweise ist der durch die Nebenstromleitung 12 geführte Treibstoff im Abschnitt 12b flüssig und im Abschnitt 12c (hinter der Temperaturaustauschzone Z) gasförmig.

Neben dem Wärmetauscher 10' kann ein Versorgungssystem einen oder mehrere (nicht gezeigte) weitere Wärmetauscher umfassen, die ebenfalls dazu eingerichtet sein können, Treibstoff, der in das Triebwerk gefördert wird, abzukühlen. Die mehreren Wärmetauscher können dabei an denselben Tank (also parallel) angeschlossen sein. Alternativ oder zusätzlich kann das Versorgungssystem mehrere Tanks mit jeweils zugehörigem Wärmetauscher umfassen, die jeweils dazu eingerichtet sind, Treibstoff des jeweiligen Tanks auf dessen Weg ins Triebwerk abzukühlen.

Im gezeigten Beispiel ist der Wärmetauscher 10', der vorzugsweise als Druckbehälter ausgestaltet ist, außerhalb des Tanks angeordnet. Wärmetauscher oder mehrere Wärmetauscher sind hingegen gemäß der Erfindung innerhalb des Tanks (ggf. desselben) oder innerhalb mehrerer Tanks angeordnet.

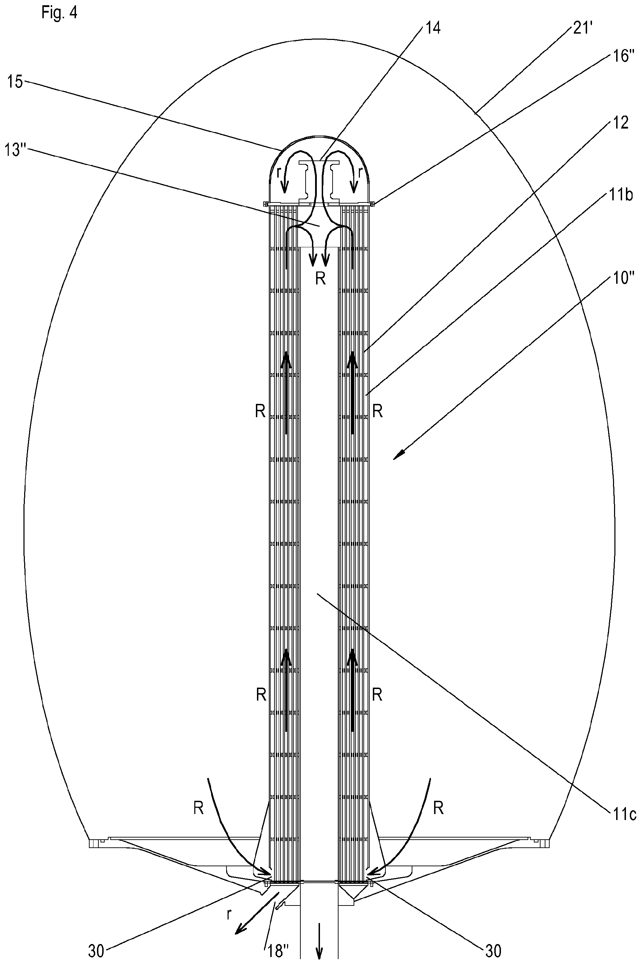

Figur 4 zeigt eine exemplarische Ausführungsform eines Wärmetauschers 10", der im Innern eines (schematisch und nicht maßstabsgerecht dargestellten) Tanks 21' angeordnet ist. Der Wärmetauscher 10" weist eine im Wesentlichen kreiszylindrisch ausgebildete Grundform auf. Ein Abschnitt 11b einer Hauptstromleitung erstreckt sich dabei von Einlassöffnungen 30 durch einen äußeren Ringbereich des Wärmetauschers 10". Ein durch die Einlassöffnungen 30 eingetretener Treibstoff umströmt in diesem äußeren Ringbereich eine Mehrzahl an Rohren, die als Nebenstromleitung 12 dienen und die dazu eingerichtet sind, einen Kühlstrom hindurchzuleiten; der äußere Ringbereich des Wärmetauschers 10" dient somit als Wärmeaustauschzone.

An einem den Einlassöffnungen 30 entgegengesetzten Ende des Wärmetauschers 10"geht die Hauptstromleitung in einen Abschnitt 11c über, der zentral im Wärmetauscher 10" angeordnet ist und parallel zu den Rohren der Nebenstromleitungen verläuft. Der vorgesehene Durchfluss durch die Haupstromleitung ist in der Figur durch Pfeile R gekennzeichnet; seine Richtung wird beim Eintritt in den Abschnitt 11c umgekehrt, so dass ein durch den Wärmetauscher hindurchgeleiteter Hauptstrom im äußeren Ringbereich und im Abschnitt 11c in zueinander entgegengesetzter Richtung verläuft. In der Darstellung der Figur 4 ergibt sich in dem äußeren Ringbereich eine vorgesehene Durchflussrichtung von unten nach oben und im Abschnitt 11c von oben nach unten. Der Abschnitt 11c ist dazu eingerichtet, an eine Zuleitung zu einem (nicht gezeigten) Triebwerk angeschlossen zu werden.

An dem Übergang der Hauptstromleitung in den Abschnitt 11c ist zudem eine Abzweigung 13", an der die Nebenstromleitung 12 von der Hauptstromleitung 11 abzweigt: Sie führt dabei zunächst durch ein Ventil 14 in eine Einspritzkuppel und von dort durch ein Einspritzvorrichtung 16" in die einzelnen Rohre der Nebenstromleitung 12. Dabei wird der Druck eines hindurchgeleiteten Treibstoffanteils abgesenkt und auf diese Weise - wie oben beschrieben - ein Temperaturabfall bewirkt. Der damit als Kühlstrom wirkende Treibstoffdampf kann durch einen Dampfauslass 18" abgelassen werden, vorzugsweise in eine Umgebung des Tanks, insbesondere ins Vakuum des Weltalls. Der Dampfauslass 18" umfasst im dargestellten Beispiel ein den Abschnitt 11c der Hauptstromleitung ringartig umlaufendes Rohr mit einer Öffnung; alternativ könnten der Dampfauslass eine Vielzahl von Öffnungen am der Einspritzkuppel 15 gegenüberliegenden Ende des Wärmetauschers 10" umfassen, durch die Dampf aus den Rohren der Nebenstromleitung 12 abgelassen werden kann.

### Bezugszeichen

10, 10', 10" Wärmetauscher
11 Hauptstromleitung
11a, 11b, 11c Abschnitt der Hauptstromleitung
12 Nebenstromleitung
12', 12" Teil-Nebenstromleitung
12a, 12b, 12c Abschnitt der Nebenstromleitung
13, 13" Abzweigung
14 Ventil
15 Einspritzkuppel
16, 16" Einspritzvorrichtung
17 Drossel
18, 18" Dampfauslass
19 Umlenk- und Halteelement
20 Versorgungssystem
21 Tank
22a Zuleitung
22b Pumpe
30 Eintrittsöffnung
R vorgesehene Durchflussrichtung durch die Hauptstromleitung
r vorgesehene Durchflussrichtung durch die Nebenstromleitung
S Stirnfläche des Wärmetauschers
Z Temperaturaustauschzone

## Patentansprüche

1. Versorgungssystem (20) für ein Triebwerk mit Treibstoff, das einen Tank (21, 21'), ein Förderleitungssystem (22a, 22b) und einen oder mehrere im Inneren des Tanks angeordnete/n Wärmetauscher (10, 10', 10") zum Kühlen von Treibstoff mittels eines Kühlstroms umfasst, wobei der eine bzw. die mehreren Wärmetauscher eine Hauptstromleitung (11) zum Durchleiten des zu kühlenden Treibstoffs und eine von der Hauptstromleitung abzweigende Nebenstromleitung (12) zum Durchleiten des Kühlstroms umfasst/umfassen,
und wobei das Förderleitungssystem dazu eingerichtet ist, Treibstoff vom Tank durch den einen oder die mehreren Wärmetauscher hindurch zum Triebwerk zu leiten.

2. Verfahren zum Kühlen von Treibstoff für ein Triebwerk unter Verwendung eines Versorgungssystems gemäß Anspruch 1, wobei das Verfahren umfasst:
ein Einleiten des Treibstoffs in eine Hauptstromleitung (11) eines Wärmetauschers (10, 10', 10"),
ein Abzweigen eines Teils des eingeleiteten Treibstoffs als Kühlstrom von der Hauptstromleitung in eine Nebenstromleitung (12) des Wärmetauschers,
ein Absenken einer Temperatur des Kühlstroms in der Nebenstromleitung,
wobei
mindestens ein Abschnitt (11b) der Hauptstromleitung und damit eine in der Hauptstromleitung fließende Treibstoffmenge mit dem Kühlstrom in der Nebenstromleitung gekühlt wird, während die in der Hauptstromleitung fließende Treibstoffmenge dem Triebwerk zugeführt wird.

3. Verfahren gemäß Anspruch 2, wobei der Treibstoff ein Flüssiggas ist und das Absenken der Temperatur des Kühlstroms durch Verringern eines Drucks des Flüssiggases auf Verdampfungsdruckniveau erfolgt.

## Claims

1. A supply system (20) for supplying an engine with fuel, comprising a tank (21, 21'), a conveyor line system (22a, 22b) and one or multiple heat exchangers (10, 10', 10"), which is/are arranged in the interior of the tank and serve/s for cooling fuel by means of a cooling flow, wherein the one or the multiple heat exchangers comprises/comprise a main flow line (11) for feeding through the fuel to be cooled and a secondary flow line (12), which branches off the main flow line and serves for feeding through the cooling flow,
and wherein the conveyor line system is designed for feeding fuel from the tank to the engine through the one or the multiple heat exchangers.

2. A method for cooling fuel for an engine by using a supply system according to claim 1, wherein the method comprises:
introducing the fuel into a main flow line (11) of a heat exchanger (10, 10', 10"),
branching off a portion of the introduced fuel from the main flow line into a secondary flow line (12) of the heat exchanger in the form of a cooling flow, and
lowering a temperature of the cooling flow in the secondary flow line,
wherein at least a section (11b) of the main flow line and therefore a fuel quantity flowing in the main flow line is cooled with the cooling flow in the secondary flow line while the fuel quantity flowing in the main flow line is fed to the engine.

3. The method according to claim 2, wherein the fuel is a liquefied gas and the temperature of the cooling flow is lowered by reducing a pressure of the liquefied gas to the evaporation pressure level.

## Revendications

1. Système d'alimentation (20) en carburant d'un groupe motopropulseur, qui comprend un réservoir (21, 21'), un système de conduits de transport (22a, 22b) et un ou plusieurs échangeur(s) thermique(s) (10, 10', 10") placé(s) à l'intérieur du réservoir, destiné(s) à refroidir du carburant au moyen d'un flux de refroidissement, l'un ou les plusieurs échangeur(s) thermique(s) comprenant un conduit (11) de flux principal, destiné à faire passer le carburant qui doit être refroidi et un conduit (12) de flux secondaire, dérivant du conduit de flux principal, destiné à faire passer le flux de refroidissement,
et le système de conduits de transport étant aménagé pour diriger du carburant vers le groupe motopropulseur, à travers l'un ou les plusieurs échangeur(s) thermique(s).

2. Procédé, destiné à refroidir du carburant pour un groupe motopropulseur en utilisant un système d'alimentation selon la revendication 1, le procédé comprenant les étapes consistant à :
introduire le carburant dans un conduit (11) de flux principal d'un échangeur thermique (10, 10', 10")
faire dériver une partie du carburant introduit en tant que flux de refroidissement du conduit de flux principal dans un conduit (12) de flux secondaire de l'échangeur thermique,
faire baisser une température du flux de refroidissement dans le conduit de flux secondaire,
au moins un tronçon (llb) du conduit de flux principal et ainsi, une quantité de carburant s'écoulant dans le conduit de flux principal étant refroidie dans le conduit de flux secondaire, alors que la quantité de carburant qui s'écoule dans le conduit de flux principal est amenée vers le groupe motopropulseur.

3. Procédé selon la revendication 2, le carburant étant un gaz liquide et l'abaissement de la température du flux de refroidissement s'effectuant par la réduction d'une pression du gaz liquide à un niveau de pression d'évaporation.
